# EUROPEAN PATENT APPLICATION

(11) **EP 4 800 607 A1**
(43) Date of publication of application: **02.09.2026**
(21) Application number: 25160399.9
(22) Date of filing: 26.02.2025
(51) Int. Cl.: G06N 3/096, G06N 3/0985, G06N 3/045, G06N 3/0464, B60W 60/00

(54) **SYSTEMS AND METHODS FOR PROVIDING AND USING A SCALABLE MACHINE LEARNING MODEL**

(71) Applicant: Robert Bosch GmbH, 70442 Stuttgart (DE)
(72) Inventor: Soliman, Taha, 71272 Renningen (DE); Rapp, Martin, 73728 Esslingen Am Neckar (DE); Topp, Jaroslaw, 71272 Renningen (DE)

(57) **Abstract**

Methods 4000, 5000 for providing and using a scalable machine learning model 20 for performing application task(s) 121, 122, 123 are provided. A primary machine learning model 10, comprising a plurality of model parameters 11, 12, 13, is trained on training data. A secondary machine learning model 21, a subset of the primary machine learning model, is provided to serve as a substitute. The primary and secondary machine learning models are jointly trained by computing outputs for the one or more application tasks of the primary machine learning model for the training data, and computing, based on the outputs and the training data, a first loss for the primary machine learning model; analogously computing a second loss for the secondary machine learning model; combining the first and second losses; and updating the plurality of model parameters of the primary and thereby those of the second machine learning model accordingly. The jointly trained models are then provided as scalable machine learning model.

## Description

### Field of the invention

The presently disclosed subject matter relates to a system and method for providing a scalable machine learning-model for performing one or more application tasks, for example for use by an automated or semi-automated driving system or other systems which benefit from a scalable machine learning models. The presently disclosed subject matter further relates to a system and method which use a scalable machine learning model for performing one or more application tasks. The presently disclosed subject matter further relates to a transitory or non-transitory computer-readable medium comprising data representing instructions, which when executed by a processor system, cause the processor system to perform one or more steps of a method as disclosed.

### Background of the invention

Many application areas that rely on digital processing systems to perform application tasks, such as vehicle control, require fallback systems to mitigate the risk of harm in the event of a failure of a primary processing system. For example, in advanced driver assistance systems (ADAS), a primary processing system typically handles a range of perception and control tasks, such as object detection, semantic segmentation, lane detection, and vehicle control. However, if the primary processing system fails due to hardware malfunctions or unexpected environmental conditions, a fallback system must take over to ensure continued safe operation.

Modern processing systems often employ machine learning models, which can impose a significant computational burden in terms of processing power, memory, and other resources. In ADAS, for example, perception tasks may rely on complex multi-task neural networks that must process real-time sensor data. Implementing a fallback system capable of performing the same tasks as the primary processing system would require comparable computational capabilities, making such systems costly.

To address this, it is known that fallback systems may operate with a reduced set of application tasks, typically limited to those deemed safety-critical. For example, in an ADAS, while the primary processing system may execute a machine learning model that performs multiple perception and decision-making tasks, the fallback system may only need to execute a subset of tasks, such as braking, steering, and collision avoidance, which are critical for maintaining safety. This reduction in required functionality allows for the use of a less complex machine learning model, such as a substitute model with fewer layers or parameters. Consequently, fallback systems can rely on less capable and, therefore, more cost-effective processing hardware.

### Summary of the invention

The inventors have recognized several issues with using separate primary and substitute machine learning models. For example, training these models independently increases computational costs and training time. In conventional approaches, a primary model is trained to handle a full set of application tasks, while a separate fallback model is separately trained to handle only the safety-critical subset of application tasks. This duplication of training efforts results in significant computational overhead.

Moreover, separate training can lead to inconsistencies between systems, such as between an ADAS primary processing system and its fallback system, which is undesirable for safety compliance. Since each model is trained separately, they may learn slightly different representations of the same environment, leading to unpredictable differences in decision-making. For example, the primary system may detect and respond to an obstacle in one way, while the fallback system, using a separately trained substitute model, may respond differently, potentially causing unsafe behaviour.

Additionally, maintaining distinct machine learning models for primary and fallback modes may result in unnecessary storage demands. A primary model, particularly in a multiheaded architecture, typically includes a shared backbone that extracts generic features for multiple application heads, each responsible for a specific task. However, in conventional fallback systems, a completely separate machine learning model is used, requiring additional storage for both the model weights and associated computational resources. This is especially problematic in resource-constrained environments, such as embedded automotive systems, where memory and processing power are limited.

The inventors have identified these challenges and recognized the need for an improved approach that enables efficient fallback operation while mitigating inconsistencies, reducing computational overhead, and/or optimizing storage requirements.

In accordance with a first aspect of the invention, as defined by claim 1, a method is provided for providing a scalable machine learning model for performing one or more application tasks. In accordance with a further aspect of the invention, a system is provided as defined by claim 14 in combination with any of claims 1-9. In accordance with a further aspect of the invention, a computer-readable medium is provided as defined by claim 15 in combination with any of claims 1-9.

Briefly speaking, the above measures may involve providing a scalable model which comprises a primary machine learning model for performing one or more application tasks, and a secondary machine learning model for performing at least a subset of the one or more application tasks. Interestingly, the secondary machine learning model may be constituted by a subset of the primary machine learning model, and specifically by a subset of the model parameters of the primary machine learning model. The secondary machine learning model therefore may not need to require additional storage with respect to the primary machine learning model. The above measures further involve jointly training the primary machine learning model and the secondary machine learning model by computing a loss for each model separately and combining the losses to obtain a combined loss to update the model parameters. Such joint training using a combined loss may avoid or reduce inconsistencies between the behaviour of both models.

Interestingly, the secondary machine learning model may be used in fallback systems, such as the aforementioned ADAS, but also in situations requiring scalability between a more complex primary model and a less complex secondary model. For example, in battery-operated devices, the device may switch to the secondary model when the battery level becomes critical. Similarly, in edge computing applications or low-power loT devices, a less complex machine learning model may be used to conserve computational resources, such as power compute, when operating under constrained conditions. In general such scalability may be beneficial as it allows to switch between different level of operation, for example, in order to switch to a machine learning model using a different level of computational complexity.

The following discusses the above measures in more detail. Model data may be accessed that defines a primary machine learning model. The primary machine learning model may comprise a neural network, for example a convolutional neural network. The primary machine learning model may comprise a multi-task model, which is configured to perform multiple application tasks of the one or more application tasks. The one or more application tasks may comprise one or more of: a perception task, such as object detection, semantic segmentation, or line detection; a classification task, such as image classification, or performing a semantic segmentation on input data; and performing a regression analysis, such as a regression analysis regarding a distance, a velocity, and/or an acceleration of an object in input data, and/or a tracking of an object in input data. For example, the one or more application tasks may comprise one or more application tasks of an automated or semi-automated driving system. The primary machine learning model may comprise a plurality of model parameters. The plurality of model parameters may comprise a number of, for example at least one million, for example, at least two million, at least three million, at least four million, five million, at least eight million model parameters. The plurality of model parameters may, for example, comprise a number of at least ten million, at least twenty million, at least thirty million, at least forty million, fifty million, at least eighty million, or at least a hundred million model parameters. The plurality of model parameters may comprise, for example, one or more model weights, such as network weights, such as neural network weights. The plurality of model parameters may comprise architectural parameters, comprising information on the model architecture of the machine learning model. For example, the architectural parameters may comprise information on the neural network architecture, such as the convolutional neural network architecture; for example, information on one or more model architecture elements. The one or more model architecture elements may comprise one or more layers, and/or sets of one or more layers. The one or more layers may comprise network layers, such as convolutional layers, and/or activation layers. The one or more model architecture elements may comprise connections between one or more model architecture elements, such as connections between layers. The connections may comprise residual connections between model architecture elements, through which one or more intermediate architectural elements may be skipped. The one or more model architecture elements may comprise one or more maps, such as an activation map, a feature map, and/or a convolutional feature map. The activation map may be a ReLU activation map. The map may map an input into a feature space, such as a two-dimensional or multidimensional array or grid of numbers. The mapping may result from an application of a convolutional filter or kernel. The one or more model architecture elements may comprise one or more convolutional filters, or kernels. The one or more convolutional filters or kernels may be part of a convolutional neural network. The plurality of model parameters may comprise one or more parameters of model architecture elements in the one or more model architecture elements of the model architecture. For example, the plurality of model parameters may comprise a size and/or a number of convolutional filters or kernels of one or more convolutional layers, e.g., of a convolutional neural network. The convolutional neural network may be comprised in or constitute the machine learning model. The plurality of model parameters may comprise one or more network weights associated with model architecture elements of the machine learning model architecture. The one or more network weights may be weights associated with one or more network layers, and/or weights associated with connections between model architecture elements. The plurality of model parameters may comprise one or more of a size, a dimension of an input space and a dimension of a feature space of a map in the machine learning model architecture. The map may be an activation map, a feature map, and/or a convolutional feature map. The map may map the input space to the feature space. The map may map an input from the input space, the input having the dimension of the input space, into a feature in the feature space, having the dimension of the feature space. The mapped feature may be, e.g., an array or grid having the dimension of the feature space, filled with numbers. The map may result from an application of a convolutional filter or kernel.

The above measures may further involve accessing training data. The training data may be accessed for training the primary machine learning model. The machine learning model may be trained on a training data set comprising the training data. The training data may be of a same datatype as model data in the model data, model parameters in the plurality of model parameters, and/or input data for the primary machine learning model. The training data may comprise model data, and/or model parameters. The training data may comprise input data. The input data may comprise sensor data, for example, one or more of: image data, such as digital image data, radar, LiDAR, ultrasonic data, motion data, or thermal images. The input data may comprise audio data, such as an audio signal. The primary machine learning model may be trained on the training data to obtain a trained primary machine learning model. The primary machine learning model may be trained for deployment on an automated or semi-automated driving system.

The above measures may further involve providing a secondary machine learning model. The secondary machine learning model may be provided to serve as a substitute for the primary machine learning model. The secondary machine learning model may be provided to serve as a substitute for the primary machine learning model in at least a subset of the one or more application tasks. The secondary machine learning model may be constituted by a subset of the primary machine learning model. Optionally, the primary machine learning model may comprise one or more input elements. The one or more input elements may be for receiving an input to the primary machine learning model. The secondary machine learning model may comprise a subset of the one or more input elements. For example, the primary machine learning model may be configured to receive an image having a first resolution as an input. The secondary machine learning model may be configured to receive an image having a second resolution as an input, wherein the second resolution is lower than the first resolution. Optionally, the primary machine learning model may further comprise one or more output elements. The one or more output elements may be for outputting an output of the primary machine learning model. Optionally, an output element of the secondary machine learning model may be constituted by a subset of the one or more output elements of the primary machine learning model. Optionally, an output element of the secondary machine learning model may be constituted by one or more intermediate output elements of the primary machine learning model.

The subset of the primary machine learning model constituting the secondary machine learning model may include a subset of the plurality of model parameters of the primary machine learning model. For example, the subset of the primary machine learning model constituting the secondary machine learning model may comprise at most eighty percent, at most seventy-five percent, at most fifty percent, at most forty percent, at most thirty percent, at most twenty percent, at most ten percent, at most five percent, at most four percent, at most three percent, at most two percent, at most one percent, at most a tenth percent, at most a hundredth percent, or at most a thousandth percent of the plurality of model parameters of the primary machine learning model For example, the primary machine learning model may comprise a convolutional neural network, comprising one or more convolutional layers, and the plurality of model parameters may comprise one or more of: a number of convolutional layers, a width, size, convolutional kernel size, group size and/or a number of kernels and/or channels of a convolutional layer in the machine learning model architecture. Then, the secondary machine learning model may be a convolutional neural network as well, and model parameters of the secondary machine learning model may comprise one or more of: a lower number of convolutional layers, a smaller width, a smaller size, a smaller kernel size, a smaller group size and/or a lower number of kernels and/or a lower number of channels of a convolutional layer in the machine learning model architecture. For example, the primary machine learning model may comprise one or more transformer layers, and the plurality of model parameters may comprise one or more of: a number of transformer heads, an embedding dimension, and/or a multi-layer perceptron (MLP) ratio of the one or more transformer layers in the machine learning model architecture. Then, the secondary machine learning model may comprise one or more transformer layers as well, and model parameters of the secondary machine learning model may comprise one or more of: a lower number of transformer layers, a lower number of transformer heads, a smaller embedding dimension, and/or a smaller MLP ratio of a transformer layer in the machine learning model architecture. For example, the primary machine learning model may comprise a number of model elements, such as network layers, and the secondary machine learning model may comprise a subset of the model elements; for example, the secondary machine learning model may comprise a lower number of network layers. For example, the primary machine learning model may comprise a number of network weights, and the secondary machine learning model may comprise a lower number of network weights, comprised in the number of network weights, and/or a number of reduced network weights, comprising, for example, lower network weights. The primary machine learning model may comprise one or more connections. The one or more connections may connect one or more model elements of the primary machine learning model. The secondary machine learning model may comprise a subset of the one or more connections of the primary machine learning model. Optionally, the secondary machine learning model may comprise residual connections. The residual connections may directly connect one or more model elements of the secondary machine learning model, while the corresponding model elements in the primary machine learning model may not be directly connected. For example, the plurality of model parameters of the primary machine learning model may comprise one or more of a size, a dimension of an input space and a dimension of a feature space of a map in the machine learning model architecture; and model parameters of the secondary machine learning model may comprise a smaller size, a lower dimension of the input space and/or a lower dimension of the feature space of the map. All of the above examples may be considered as sharing all or parts of model parameters, and/or a type of weights, such as network weights. The parameters and/or weights may be shared between different model architectures and/or networks. Following the main concept, starting from the full network, such as constituted by the primary machine learning model, subnetworks, such as constituted by the one or more secondary machine learning models, use a subset of the architecture. The subset of the architecture may comprise one or more of an architecture using fewer convolutional channels, a smaller convolutional kernel size, fewer transformer heads, a smaller MLP ratio, and/or simply fewer layers, such as fewer convolutional layers. The parameters and/or weights of the subnetworks may then be considered as being constituted by subsets of the corresponding parameters and/or weights in the full network. In particular, this means that all or parts of the parameters and/or weights may be seen as shared between a subnetwork and the full network, and/or hence, also be seen as shared between two subnetworks.

The above measures may further involve jointly training the primary machine learning model and the secondary machine learning model. The primary machine learning model and the secondary machine learning model may be jointly trained during the training of the primary machine learning model. The joint training of the primary machine learning model and the secondary machine learning model may comprise a step of computing outputs for the one or more application tasks of the primary machine learning model for the training data. The joint training of the primary machine learning model and the secondary machine learning model may further comprise a step of computing a first loss for the primary machine learning model. The first loss for the primary machine learning model may be computed based on the outputs and the training data. The joint training of the primary machine learning model and the secondary machine learning model may comprise a step of computing outputs for the one or more application tasks of the secondary machine learning model for the training data. The joint training of the primary machine learning model and the secondary machine learning model may further comprise a step of computing a second loss for the secondary machine learning model. The second loss for the secondary machine learning model may be computed based on the outputs and the training data. The joint training of the primary machine learning model and the secondary machine learning model may comprise a step of combining the first loss and the second loss. The first loss and the second loss may be combined by summing the first loss and the second loss, for example, by adding the first loss and the second loss in a regular sum, and/or in a weighted sum. The first loss and the second loss may be combined by averaging the first loss and the second loss, for example, in a weighted average, resulting in a mean, such as an arithmetic mean or a geometric mean. From combining the first loss and the second loss, a combined loss may be obtained. The joint training of the primary machine learning model and the secondary machine learning model may further comprise a step of updating the plurality of model parameters of the primary machine learning model. The plurality of model parameters of the primary machine learning model may be updated based on the combined loss. Inherently, the subset of model parameters for the secondary machine learning model may thereby, *de facto,* be updated as well. Therefore, an updated subset of model parameters for the secondary machine learning model is obtained. The above measures may further involve, after jointly training the primary machine learning model and the secondary machine learning model, providing the jointly trained primary machine learning model and secondary machine learning model as the scalable machine learning model. The jointly trained primary machine learning model and secondary machine learning model may be provided as a scalable machine learning model for deployment on an automated or semi-automated driving system. Optionally, the updated model parameters may be used in a neural architecture search. The neural architecture search may be a model architecture search, to arrive at a model architecture for, e.g., the secondary machine learning model.

The above measures may be based on the insight that, in considering different operation levels, different machine learning models may be taken into consideration and chosen in the following way. For the model architectures of these different machine learning models, a so-called weight-sharing paradigm may be employed. According to this paradigm, model architectures of secondary machine learning models are considered as networks which 'share weights' with the model architectures of a primary machine learning model, i.e., are subnetworks of the network corresponding to the primary machine learning model architecture. This especially means that the corresponding model parameters of the secondary machine learning models are comprised, or encompassed in the set corresponding to the plurality of model parameters of the primary machine learning model. In only considering such secondary machine learning models, it is ensured that in training the primary machine learning model and updating the plurality of model parameters of this model, also the model parameters associated with the secondary machine learning model architecture are updated, and thereby the secondary machine learning model is trained. Therefore, because of this joint training of the primary machine learning model and the secondary machine learning model, only a single training run is needed for both the primary machine learning model and the secondary machine learning model. This reduces and possibly minimises the training costs. Moreover, since the same training run is used for both the primary machine learning model and the secondary machine learning model, the risk of inconsistent behaviour between the resulting processing systems associated with the different machine learning models is minimised. This facilitates a successful integration of the secondary machine learning model within an overall, main processing system, thereby facilitating compatibility of the machine learning models and processing systems with each other, as well as efficiency. Also, from a storage point of view, as the secondary machine learning model is fully comprised in the primary machine learning, it would be sufficient to, for example, store only the plurality of model parameters constituting the primary machine learning model and accompany this with, e.g., metadata, which indicate the subset of the primary machine learning model parameters which constitutes the secondary machine learning model. By storing the secondary machine learning model in this minimal way, also the cost of storage is minimised.

Optionally, the primary machine learning model is a multiheaded machine learning model. The multiheaded machine learning model may comprise a primary backbone model, and one or more application heads. Each of the one or more application heads may be configured to perform one or more of the one or more application tasks. An application head may be configured to perform an application task based on an output of the primary backbone model. The secondary machine learning model may comprise a secondary backbone model. The secondary backbone model may comprise a subset of the primary backbone model. The training may then comprise jointly training the primary backbone model and the secondary backbone model. By using multi-headed machine learning models sharing their backbone for the primary machine learning model and the secondary machine learning model, a computational overhead of the substitute processing system may be minimised.

In accordance with a further aspect of the invention, as defined by claim 10, a method is provided for using a scalable machine learning model for performing one or more application tasks of a system, wherein the scalable machine learning model has been trained using a method according to the abovementioned measures. In accordance with a further aspect of the invention, a system is provided as defined by claim 14 in combination with any of claims 10-13. In accordance with a further aspect of the invention, a computer-readable medium is provided as defined by claim 15 in combination with any of claims 10-13.

The above measures may involve, in a regular mode, using the primary machine learning model for an application task of the one or more application tasks of the system. The regular mode may comprise a general operation mode, main mode, and/or normal mode and/or level of operation. In the regular mode, a main processing system may be operated. The main processing system may execute the primary machine learning model. The system associated with the one or more application tasks may be a driver assistance system, such as an ADAS. The above measures may further involve, in a substitute mode, switching to using the secondary machine learning model for an application task of the one or more application tasks of the system. The substitute mode may comprise a substitute operation mode, such as a fall-back and/or a back-up mode. In the substitute mode, a substitute processing system may be operated. The substitute processing system may execute the secondary machine learning model. The application task for which the secondary machine learning model may be used may be a safety-critical application task, e.g., a safety-critical application task of the one or more application tasks of the driver assistance system. Optionally, the above measures may further involve dynamically configuring and/or scheduling operating the regular mode and/or the substitute mode. Optionally, the above measures may further involve dynamically configuring and/or scheduling performing one or more of the one or more application tasks in the regular mode and/or the substitute mode.

By the above measures, a scalable functionality for performing the application tasks of the system is enabled. By being able to use a primary machine learning model, associated with a general level of operation of the system, and one or more secondary machine learning models, associated with one or more substitute levels of operation, according to the above measures, a trade-off is enabled between performance and application tasks in the options of switching to different levels of operation and optionally dynamical configuration and/or scheduling of the operation of the different modes of operation and/or performing of the application tasks in the different modes. Importantly, by these options, there is no need to design different processing systems for different levels of operation; for example a change of a network used in, e.g., an ADAS, or an update of the ADAS.

The above measures may further involve switching to using the secondary machine learning model based on one or more operation conditions. For example, the one or more operation conditions may comprise at least one of: a failure of the primary machine learning model; unavailability of the primary machine learning model; a threshold of a performance of the primary and/or secondary machine learning model with respect to the one or more application tasks, e.g., an accuracy, being surpassed; and/or a threshold of a hardware efficiency, such as a latency, of the primary and/or secondary machine learning model with respect to hardware resources of the system, e.g., compute resources, being surpassed. By imposing such operation conditions, e.g., safety requirements may be efficiently implemented.

In a further aspect of the invention, a system is provided, which comprises one or more processors; and one or more storage devices storing instructions that, when executed by the one or more processors, cause the one or more processors to perform operations for a method according to an embodiment as discussed above. Optionally, the system is an automated or semi-automated driving system. The automated or semi-automated driving system may be for an autonomous or semi-autonomous vehicle. The one or more storage devices may comprise a data storage. The data storage may be configured for storing a scalable machine learning model. The scalable machine learning model may comprise a primary machine learning model and a secondary machine learning model. The scalable machine learning model may have been trained using a method according to an embodiment. Optionally, the second machine learning model is stored in the form of metadata, the metadata indicating the subset of the primary machine learning model constituting the secondary machine learning model. The one or more processors may be configured to execute a method as defined in any of claims 10-13. The one or more processors may be configured to, in a regular mode, use the primary machine learning model for performing an application task of the automated or semi-automated driving system, and, in a fallback mode, switch to using the secondary machine learning model for an application task of the automated or semi-automated driving system. In a further aspect of the invention, an autonomous or semi-autonomous vehicle is provided, the vehicle comprising an automated or semi-automated driving system according to an embodiment.

In a further aspect of the invention, a transitory or non-transitory computer-readable medium is provided, which comprises data representing instructions, which when executed by a processor system, cause the processor system to perform one or more steps of the method according to an embodiment as discussed above.

It will be appreciated by those skilled in the art that two or more of the above-mentioned embodiments, implementations, and/or optional aspects of the invention may be combined in any way deemed useful.

Modifications and variations of any device, system, network, computer-implemented method and/or any computer readable medium, which correspond to the described modifications and variations of another of such entities, can be carried out by a person skilled in the art on the basis of the present description.

### Brief description of the drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
**Fig. 1a** shows an example of an automated or semi-automated driving system;
**Fig. 1b** shows an example of an autonomous or semi-autonomous vehicle;
**Fig. 2a** shows primary and secondary machine learning models according to an embodiment;
**Figs. 2b** **and** **2c** shows joint training steps of the primary and secondary machine learning models of a training method according to an embodiment;
**Fig. 3** shows an example of a multiheaded machine learning model;
**Fig. 4** shows a method of providing a scalable machine learning model according to an embodiment;
**Fig. 5** shows a method of using a scalable machine learning model according to an embodiment;
**Fig. 6a** shows a computer-readable medium having a writable part comprising a computer program according to an embodiment; and
**Fig. 6b** shows a representation of a processor system according to an embodiment.

### Reference signs list

The following list of references and abbreviations is provided for facilitating the interpretation of the drawings and shall not be construed as limiting the claims.
- 1, 1': input element, network layer, input layer
- 1, 1': subset of input element
- 1, 2, 3: model elements, network layers
- 1-2'-3', 1'-3: subset of model elements
- 1*, 2*: connections, network connections
- 2, 2': network layer, convolutional layer
- 3, 3': output element, network layer, output layer
- 3*: residual connection
- 10: primary machine learning model, convolutional neural network
- 10': trained primary machine learning model
- 11, 12, 13: model parameters, subset of model parameters
- 11', 12', 13': updated model parameters
- 20: scalable machine learning model
- 21, 22: secondary machine learning model
- 21', 22': trained secondary machine learning model
- 30: input to primary backbone model
- 30': output of primary backbone model
- 30": output of secondary backbone model
- 31: training data
- 32, 32', 32": outputs of the machine learning models

- 100: vehicle, autonomous or semi-autonomous vehicle
- 101: input to primary machine learning model, sensor data
- 101': input to secondary machine learning model
- 102: output of primary machine learning model
- 110: automated or semi-automated driving system
- 111: processor system
- 112: memory, data storage
- 113: communication interface
- 115: image sensor
- 116: pedestrian
- 121, 122, 123: application task

- 300: multiheaded machine learning model
- 301, 302, 303: application heads
- 310: primary backbone model
- 320: secondary backbone model

- 510: regular mode
- 530: fallback mode

- 1000: optical storage device
- 1001: memory card
- 1020, 1021: stored data

- 1110: subsystems or components
- 1120: processing subsystem
- 1122: memory
- 1124: dedicated integrated circuit
- 1126: communication interface
- 1130: interconnect
- 1140: processor system

- 4000: method for providing a scalable machine learning model
- 4100: accessing model data
- 4200: accessing training data
- 4300: training the primary machine learning model
- 4400: providing a secondary machine learning model
- 4500: jointly training the machine learning models
- 4511, 4521: computing outputs
- 4512, 4522: computing losses
- 4530: combining the losses
- 4540: updating the model parameters
- 4600: providing the scalable machine learning model
- 4700: using updated model parameters in a NAS

- 5000: method of using a primary machine learning model
- 5100: using the primary machine learning model
- 5200: switching
- 5300: using the secondary machine learning model

- 1000: optical storage device
- 1001: memory card
- 1020, 1021: stored data

- 1140: processor system
- 1110: subsystems or components
- 1120: processing subsystem
- 1122: memory
- 1124: dedicated integrated circuit
- 1126: communication interface
- 1130: interconnect

### Detailed description of embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

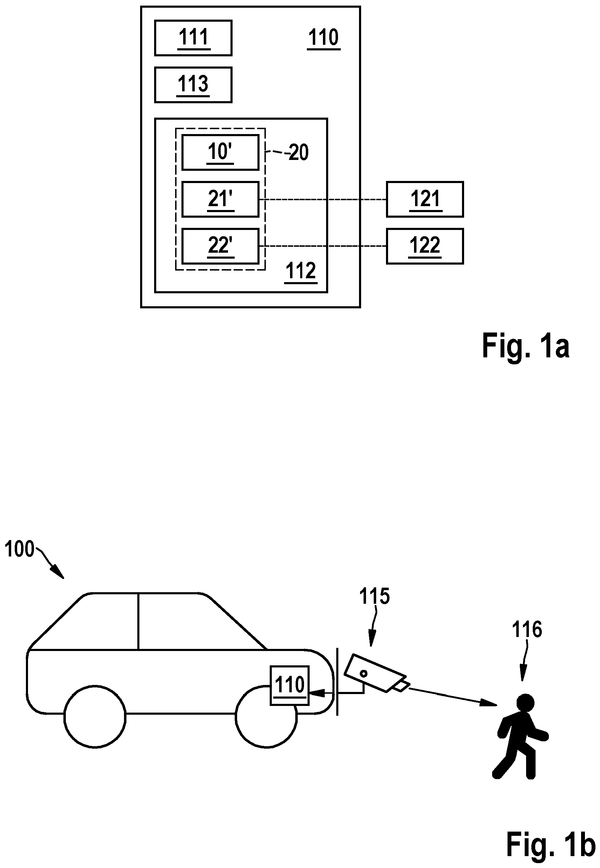

**Fig. 1a** shows an example of an automated or semi-automated driving system 110, or a driver assistance system 110, such as an ADAS 110. Automated or semi-automated driver assistance system 110 may be for use in a automated or semi-automated vehicle. Another multi-purpose, multi-task, multi-head and/or multi-application system or subsystem 110, for example in the field of automated technology and/or for serving specific applications in automation, may also be considered. Driver assistance system 110 may comprise a processor 111, a memory 112, and a communication interface 113. Memory 112 may store instructions that, when executed by processor system 111, cause processor system 111 to perform operations for executing a method according to an embodiment, such as using scalable machine learning model 20. Driver assistance system 110 may comprise communication interface 113, e.g., to communicate with, e.g., a sensor and/or another communication interface of a system, such as a multi-purpose system. Communication interface 113 may be selected from various alternatives. For example, the interface 113 may be a network interface to a local or wide area network, e.g., the Internet, a storage interface to an internal or external data storage, an application interface (API), etc. Memory 112 may comprise a storage, e.g., electronic storage, magnetic storage, etc. The storage may comprise local storage, e.g., a local hard drive or electronic memory. The storage may comprise non-local storage, e.g., cloud storage. In the latter case, the storage may comprise a storage interface to the non-local storage. The storage may comprise multiple discrete sub-storages together making up memory 112. The storage may comprise non-transitory storage. For example, the storage may store data in the presence of power such as a volatile memory device, e.g., a Random Access Memory (RAM). For example, memory 112 may store data in the presence of power as well as outside the presence of power such as a non-volatile memory device, e.g., Flash memory. Memory 112 may comprise a non-volatile non-writable part, e.g., ROM, e.g., storing part of the software. The execution of driver assistance system 110, which may comprise the execution of a method according to an embodiment, such as using scalable machine learning model 20, may be implemented in processor system 111. Driver assistance system 110 may comprise functional units to implement aspects of embodiments. The functional units may be part of the processor system 111. For example, functional units shown herein may be wholly or partially implemented in computer instructions that are stored in a storage 112 of the driver assistance system 110 and executable by the processor system 111. The processor system 111 may comprise one or more processor circuits, e.g., microprocessors, CPUs, GPUs, etc. Driver assistance system 110 may comprise multiple processors. A processor circuit may be implemented in a distributed fashion, e.g., as multiple sub-processor circuits. For example, driver assistance system 110 may use cloud computing. Driver assistance system 110 may comprise a microprocessor which executes appropriate software stored at the device; for example, that software may have been downloaded and/or stored in a corresponding memory, e.g., a volatile memory such as RAM or a non-volatile memory such as Flash. Instead of using software to implement a function, driver assistance system 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, driver assistance system 110 may comprise circuits, e.g., for cryptographic processing, and/or arithmetic processing. In hybrid embodiments, functional units are implemented partially in hardware, e.g., as coprocessors, and partially in software stored and executed on the device.

Memory or data storage 112 may store scalable machine learning model 20. Scalable machine learning model 20 may have been trained according to an embodiment. Scalable machine learning model 20 may comprise a primary machine learning model 10'. Primary machine learning model 10' may be configured to perform one or more application tasks 121, 122; shown are two. Primary machine learning model 10' may have been trained. Primary machine learning model 10' may have been trained according to an embodiment. The use of primary machine learning model 10' may correspond to a certain first level of operation, e.g., a regular mode of operation. The certain first level of operation may be a level of operation of Driver assistance system 110, and/or of a system of which Driver assistance system 110 forms a part. Scalable machine learning model 20 may further comprise one or more secondary machine learning models 21', 22'; shown are two. The one or more secondary machine learning models 21', 22' may each be configured to perform one or more application tasks 121, 122 of the one or more application tasks 121, 122. For example, a first secondary machine learning model 21' may be configured to perform a first application task 121; for example, a second secondary machine learning model 22' may be configured to perform a second application task 122. The one or more secondary machine learning models 21', 22' may have been trained. The one or more secondary machine learning models 21', 22' may have been jointly trained with primary machine learning model 10'. The one or more secondary machine learning models 21', 22' may have been trained according to an embodiment. The use of the one or more secondary machine learning models 21', 22' may correspond to one or more certain secondary levels of operation, e.g., one or more substitute modes of operation. The one or more certain secondary levels of operation may be levels of operation of driver assistance system 110, such as a fall-back and/or back-up modes of operation, and/or of a system of which Driver assistance system 110 forms a part. Memory 112 may store the primary 10' and/or secondary machine learning models 21', 22' in the form of model data, the model data defining the machine learning models, e.g., via their architecture. For example, memory 112 may store model parameters. Memory 112 may store a plurality of model parameters constituting the primary machine learning model 10'. Memory 112 may further store, e.g., metadata, the metadata indicating one or more subsets of the primary machine learning model parameters 10' which constitutes the one or more secondary machine learning models 21'. 22'.

The one or more processors 111 may be configured to, in a regular mode, use the primary machine learning model 10' for performing an application task 121, 122 of the automated or semi-automated driver assistance system 110. The one or more processors 111 may be configured to, in a fallback mode, switch to using one or more of the one or more secondary machine learning models 21', 22' for one or more of the one or more application tasks 121, 122 of the automated or semi-automated driver assistance system 110.

Driver assistance system 110 may be part of a larger, multi-purpose system. Driver assistance system 110 may be embedded, comprised, incorporated and/or integrated in such a system. Driver assistance system 110 may serve a specific purpose, such as assisted driving, which comprises the execution of one or more particular application tasks 121, 122 within the applications of the larger system. Driver assistance system 110 may be configured to perform one or more particular application tasks 121, 122. To this end, Driver assistance system 110 may comprise the scalable machine learning model 20, together with instructions for executing the scalable machine learning model 20.

**Fig. 1b** shows an example of an autonomous or semi-autonomous vehicle 100. Autonomous or semi-autonomous vehicle 100 may comprise and/or constitute a multi-purpose system. Autonomous or semi-autonomous vehicle 100 may comprise an automated or semi-automated driver assistance system 110 according to an embodiment. Driver assistance system 110 may be integrated in the automated or semi-automated vehicle 100. Autonomous or semi-autonomous vehicle 100 may further comprise an image sensor 115, such as a video camera 115. Image sensor 115 may be connected to driver assistance system 110. Image sensor 115 and/or driver assistance system 110 may be configured to classify sensor data, and/or detect objects in the sensor data, e.g., traffic participants 116, such as pedestrians, or other objects such as traffic signs, road surfaces, and/or other vehicles. Image sensor 115 may communicate such a detection with driver assistance system 110. Steering, braking, and/or performing other actions on the vehicle 100 to, e.g., take road signs and/or road surfaces into account and/or avoid other traffic participants 116 is an example of safety-critical application tasks 121, 122 of a driver assistance system 110, which it should be able to perform at all times, so also in a substitute mode. Other types of automated or semi-automated vehicles 100 may comprise autonomous or semi-autonomous aircrafts, such as aeroplanes.

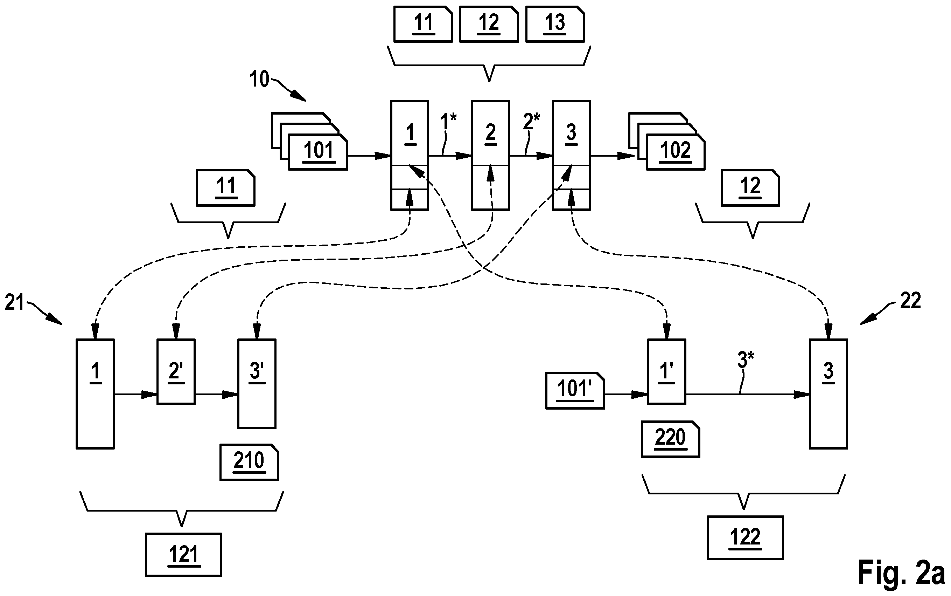

**Fig. 2a** shows primary 10 and secondary machine learning models 21, 22 according to an embodiment. The primary machine learning model 10 may, for example, comprise a certain machine learning model architecture, comprise one or more model architecture elements; for example, one or more network layers 1, 2, 3. For example, primary machine learning model 10 may comprise a neural network, such as a convolutional neural network 10. Primary machine learning model 10 may comprise a multi-task model, which is configured to perform multiple application tasks 121, 122. The one or more application tasks 121, 122 may comprise one or more of: a perception task, such as object detection, semantic segmentation, or line detection; a classification task, such as image classification, or performing a semantic segmentation on input data 101; and performing a regression analysis, such as a regression analysis regarding a distance, a velocity, and/or an acceleration of an object in input data 101, and/or a tracking of an object in input data 101. For example, the one or more application tasks 121, 122 may comprise one or more application tasks 121, 122 of an automated or semi-automated driving system 110. Primary machine learning model 10 may comprise a plurality of model parameters 11, 12, 13. The plurality of model parameters 11, 12, 13 may comprise, for example, one or more model weights 11, 12, 13, such as network weights, such as neural network weights. The plurality of model parameters 11, 12, 13 may comprise architectural parameters, comprising information on the model architecture of the machine learning model 10. For example, the architectural parameters 11, 12, 13 may comprise information on the neural network architecture, such as the convolutional neural network architecture; for example, information on one or more model architecture elements 1, 2, 3, 1*, 2*. The one or more model architecture elements 1, 2, 3, 1*, 2* may comprise one or more layers 1, 2, 3, and/or sets of one or more layers. The one or more layers 1, 2, 3 may comprise network layers, such as convolutional layers, and/or activation layers. The one or more model architecture elements 1, 2, 3, 1*, 2* may comprise connections 1*, 2* between one or more model architecture elements, 1,2 3, such as connections 1*, 2* between layers 1, 2, 3. The connections 1*, 2* may comprise residual connections 3* between model architecture elements, 1', 3, through which one or more intermediate architectural elements 2 may be skipped. The one or more model architecture elements 1, 2, 3, 1*, 2* may comprise one or more maps, such as an activation map, a feature map, and/or a convolutional feature map. The activation map may be a ReLU activation map. The map may map an input into a feature space, such as a two-dimensional or multidimensional array or grid of numbers. The mapping may result from an application of a convolutional filter or kernel. The one or more model architecture elements 1, 2, 3, 1*, 2* may comprise one or more convolutional filters, or kernels. The one or more convolutional filters or kernels may be part of a convolutional neural network 10. The plurality of model parameters 11, 12, 13 may comprise one or more parameters 11, 12, 13 of model architecture elements 1, 2, 3, 1*, 2* in the one or more model architecture elements 1, 2, 3, 1*, 2* of the model architecture. For example, the plurality of model parameters 11, 12, 13 may comprise a size and/or a number of convolutional filters or kernels of one or more convolutional layers 1, 2, 3, e.g., of a convolutional neural network 10. The convolutional neural network 10 may be comprised in or constitute the machine learning model 10. The plurality of model parameters 11, 12, 13 may comprise one or more network weights associated with model architecture elements 1, 2, 3, 1*, 2* of the machine learning model architecture. The one or more network weights may be weights associated with one or more network layers 1, 2, 3, and/or weights associated with connections 1*, 2* between model architecture elements 1, 2, 3. The plurality of model parameters 11, 12, 13 may comprise one or more of a size, a dimension of an input space and a dimension of a feature space of a map in the machine learning model architecture. The map may be an activation map, a feature map, and/or a convolutional feature map. The map may map the input space to the feature space. The map may map an input from the input space, the input having the dimension of the input space, into a feature in the feature space, having the dimension of the feature space. The mapped feature may be, e.g., an array or grid having the dimension of the feature space, filled with numbers. The map may result from an application of a convolutional filter or kernel.

Primary machine learning model 10 may comprise one or more input elements 1, such as an input layer 1, which may be configured to receive input data 101. Input data 101 for the primary machine learning model may comprise model data, and/or model parameters 11, 12, 13. The input data 101 may comprise sensor data, which primary machine learning model 10 may receive from a sensor, such as an image sensor 115. The sensor data may obtained from a sensor 115. The one or more application tasks 121, 122 may comprise the analysis or other ways of analysing data obtained from a sensor 115. The sensor 115 may be configured to determine measurements of the environment. The measurements of the environment may be in the form of sensor signals. The sensor signals may be given in the form of the following types of sensor data. The sensor data may comprise, for example, one or more of: image data, such as digital image data, e.g. video data; radar, LiDAR, ultrasonic data; motion data, or thermal images. The input data may comprise audio data, such as an audio signal.

The one or more secondary machine learning models 21, 22 may be provided to serve as a substitute for the primary machine learning model 10. The one or more secondary machine learning models 21, 22 may be provided to serve as a substitute for the primary machine learning model 10 in at least a subset of the one or more application tasks 121, 122. The one or more secondary machine learning models 21, 22 may be constituted by a subset of the primary machine learning model 10. For example, a secondary machine learning model 21, 22 may comprise a subset 1, 1' of the one or more input elements. As shown, secondary machine learning model 21 comprises the whole input layer 1 of primary machine learning model 10, and secondary machine learning model 22 comprises part 1' of input layer 1 of primary machine learning model 10. For example, primary machine learning model 10 may be configured to receive an image 101 having a first resolution as an input 101. The secondary machine learning model 22 may be configured to receive an image 101' having a second resolution as an input 101', wherein the second resolution is lower than the first resolution. Primary machine learning model 10 may further comprise one or more output elements 3. The one or more output elements 3 may be for outputting an output 102 of the primary machine learning model 10. Optionally, an output element 3, 3' of a secondary machine learning model 21, 22 may be constituted by a subset 3' of the one or more output elements 3 of the primary machine learning model 10. As shown, secondary machine learning model 22 comprises the whole output layer 3 of primary machine learning model 10, and secondary machine learning model 21 comprises part 3' of output layer 3 of primary machine learning model 10. An output of a secondary machine learning model 21, 22 may be constituted by an output 102 of the primary machine learning model 10. Optionally, an output of a secondary machine learning model 21, 22 may be constituted by one or more intermediate outputs of the primary machine learning model 10.

A subset of the primary machine learning model 10 constituting a secondary machine learning model 21, 22 may include a subset 11, 12 of the plurality of model parameters 11, 12, 13 of the primary machine learning model 10. As shown, the subset of the primary machine learning model 10 constituting the secondary machine learning model 21 comprises the subset 11 of the plurality of model parameters 11, 12, 13 of the primary machine learning model 10, and the subset of the primary machine learning model 10 constituting the secondary machine learning model 22 comprises the subset 12 of the plurality of model parameters 11, 12, 13 of the primary machine learning model 10. For example, the primary machine learning model 10 may comprise a convolutional neural network 10, comprising one or more convolutional layers 1, 2, 3, and the plurality of model parameters 11, 12, 13 may comprise one or more of: a number of convolutional layers 1, 2, 3, a width, size 1, 2, 3, convolutional kernel size, group size and/or a number of kernels and/or channels of a convolutional layer 1, 2, 3 in the machine learning model architecture. Then, the one or more secondary machine learning models 21, 22 may be convolutional neural networks 21, 22 as well, and model parameters 11, 12 of the one or more secondary machine learning models 21, 22 may comprise one or more of: a lower number of convolutional layers 1', 3, a smaller width, a smaller size 1', 2', 3', a smaller kernel size, a smaller group size and/or a lower number of kernels and/or a lower number of channels of a convolutional layer 1, 2, 3in the machine learning model architecture. As shown, the secondary machine learning model 21 comprises a same number, i.e. 3, of convolutional layers 1, 2', 3', but with smaller sizes for 2 of those layers 2', 3'; and the secondary machine learning model 22 comprises a lower number, i.e. 2, of convolutional layers 1', 3, with smaller sizes for 1 of those layers 1'. Primary machine learning model 10 may comprise one or more connections 1*, 2*. The one or more connections 1*, 2* may connect one or more model elements 1, 2, 3 of the primary machine learning model 10. The one or more secondary machine learning model 21, 22 may comprise a subset of the one or more connections 1*, 2* of the primary machine learning model 10. Optionally, the one or more secondary machine learning models 21, 22 may comprise residual connections 3*. The residual connections 3* may directly connect a part 1' or a whole 3 one or more model elements 1', 3 of the secondary machine learning model, while the corresponding model elements 1, 3 in the primary machine learning model 10 may not be directly connected.

The primary machine learning model 10 may be configured to perform one or more application tasks 121, 122. The one or more secondary machine learning model may be configured to perform one or more 121, 122 of the one or more application tasks 121, 122. As shown, the secondary machine learning model 21 is configured to perform the application task 121, and the secondary machine learning model 22 is configured to perform the application task 122. The one or more application tasks 121, 122 may be application tasks of, e.g., an ADAS 110. The one or more application tasks 121, 122 may comprise one or more perception tasks, such as detection the presence of objects in sensor data, semantic segmentation, and/or line detection. The one or more application tasks 121, 122 may comprise one or more classification tasks, e.g. classification of sensor data, such as image classification, video and/or audio analysis, or performing a semantic segmentation on sensor data, such as input data 101. For detecting the presence of objects in sensor data and/or performing a semantic segmentation on the sensor data regarding objects, those objects may comprise one or more of traffic signs, road surfaces, pedestrians, and/or vehicle. These application tasks may be carried out based on low-level features, e.g. edges and/or pixel attributes for, e.g., images. The one or more application tasks 121, 122 may comprise performing a regression analysis, such as a regression analysis on video and/or audio data. For example, the regression analysis may be a regression analysis regarding a distance, a velocity, and/or an acceleration of an object in the sensor data, e.g., input data 101; and/or a tracking of an item, e.g., an object, in the data, e.g., the sensor data, e.g., input data 101. These application tasks may be carried out based on low-level features, e.g. edges and/or pixel attributes for, e.g., images. The one or more second machine learning models 21, 22 may be associated with, translated to and/or stored in the form of metadata 210, 220. Metadata 210, 220 may indicate a subset of the primary machine learning model 10 which constitutes the secondary machine learning model 21, 22. Metadata may indicate this in the form of model data, and/or model parameters 11, 12. Metadata may indicate the subset of model parameters 11, 12 in the plurality of model parameters 11, 12, 13 of primary machine learning model 10. As shown, metadata 210 corresponds to secondary machine learning model 21, and corresponds to the subset 11 of model parameters 11, 12, 13; and metadata 220 corresponds to secondary machine learning model 22, and corresponds to the subset 12 of model parameters 11, 12, 13.

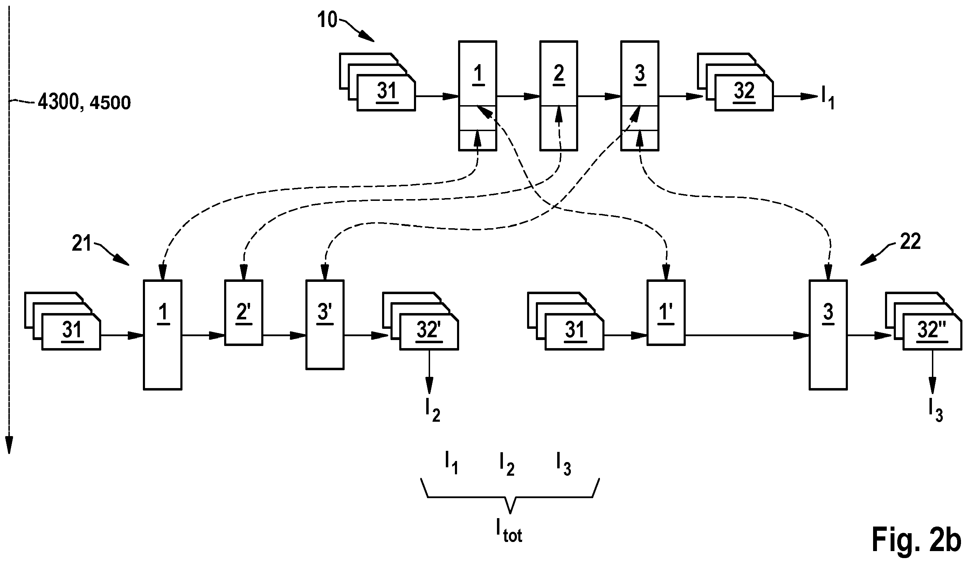

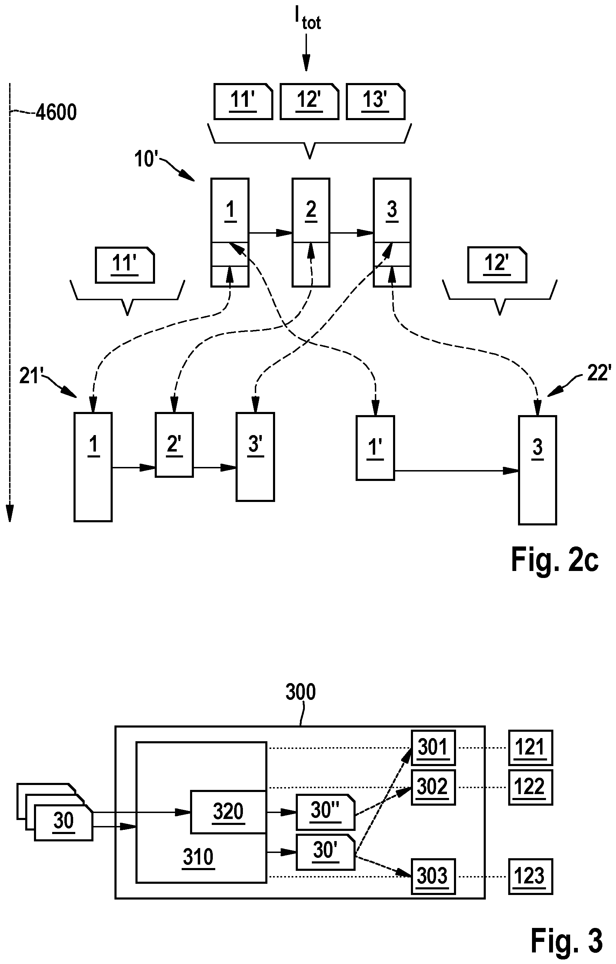

**Figs. 2b** **and** **2c** shows joint training steps 4500, 4600 of the primary 10, 10' and secondary machine learning models 21, 21', 22, 22' of a training method according to an embodiment.

Training step 4500, shown in **Fig. 2b****,** may take place during the training 4300 of primary machine learning model 10. Training data 31 may be accessed. Training data 31 may be accessed for training 4300 primary machine learning model 10. During the training 4300 of primary machine learning model 10, primary machine learning model 10 may be trained on a training data set comprising training data 31. The training data 31 may be of a same datatype as model data in the model data, model parameters 11, 12, 13 in the plurality of model parameters 11, 12, 13, and/or input data 101 for the primary machine learning model 10. The training data 31 may comprise model data, and/or model parameters 11, 12, 13. The training data 31 may comprise input data 101. Primary machine learning model 10 may be trained on the training data 31 to obtain a trained primary machine learning model 10'. The primary machine learning model 10 may be trained for deployment on an automated or semi-automated driving system 110. The joint training step 4500 is a training step 4500 on the primary machine learning model 10 and the one or more secondary machine learning models 21, 22. Primary machine learning model 10 and the one or more secondary machine learning models 21, 22 may be jointly trained during the training 4300 of primary machine learning model 10. The joint training 4500 of the primary machine learning model 10 and the one or more secondary machine learning models 21, 22 may comprise a step of computing outputs 32 for the one or more application tasks 121, 122, of the primary machine learning model 10 for the training data 31. The joint training 4500 of the primary machine learning model 10 and the one or more secondary machine learning models 21, 22 may further comprise a step of computing a first loss ℓ₁ for the primary machine learning model 10. The first loss ℓ₁ for the primary machine learning model 10 may be computed based on the outputs 32 and the training data 31. The joint training 4500 of the primary machine learning model 10 and the one or more secondary machine learning models 21, 22 may comprise a step of computing respective outputs 32', 32" for the respective one or more application tasks 121, 122 of the one or more secondary machine learning models 21, 22 for the training data 31. The joint training 4500 of the primary machine learning model 10 and the one or more secondary machine learning models 21, 22 may further comprise a step of computing one or more respective secondary losses *ℓ*₂, ℓ₃ for the one or more secondary machine learning models 21, 22. The one or more respective secondary losses ℓ₂, ℓ₃ for the one or more secondary machine learning models 21, 22 may be computed based on the respective one or more outputs 32', 32" and the training data 31. The joint training 4500 of the primary machine learning model 10 and the one or more secondary machine learning models 21, 22 may comprise a step of combining the first loss ℓ₁ and the one or more respective secondary losses ℓ₂, ℓ₃*.* The first loss ℓ₂ and the one or more respective secondary losses ℓ₂, ℓ₃ may be combined by summing the first loss ℓ₁ and one or more of the one or more respective secondary losses ℓ₂, *ℓ*₃: for example, by adding the first loss ℓ₁ and one or more of the one or more secondary losses ℓ₂, ℓ₃ in a regular sum (ℓₜₒₜ = *ℓ*₁ + ℓ₂ + ℓ₃), and/or in a weighted sum (ℓₜₒₜ = α₁ℓ₁ *+ α*₂*ℓ*₂ + α₃ℓ₃, with weights *αᵢ*, where optionally 0 ≤ *α*₁*, α*₂, *α*₃ ≤ 1, and optionally *α*₁ *+ α*₂ *+ α*₃ = 1). The first loss ℓ₁ and one or more of the one or more respective secondary losses ℓ₂, ℓ₃ may be combined by averaging the first loss and one or more of the one or more respective secondary losses ℓ₂, *ℓ*₃: for example, in a weighted average, with weights *βᵢ*, resulting in a mean, such as an arithmetic mean ${l}_{tot} = \frac{{β}_{1} {l}_{1} + {β}_{2} {l}_{2} + {β}_{3} {l}_{3}}{{β}_{1} + {β}_{2} + {β}_{3}}$ or a geometric mean $\sqrt[{β}_{1} + {β}_{2} + {β}_{3}]{{l}_{1}^{{β}_{1}} {l}_{2}^{{β}_{2}} {l}_{3}^{{β}_{3}}} .$

From combining the first loss ℓ₁ and one or more of the one or more respective secondary losses ℓ₂, ℓ₃, a combined loss ℓₜₒₜ may be obtained.

The joint training 4500 of the primary machine learning model 10 and the one or more secondary machine learning models 21, 22 may further comprise a step 4600 of updating the plurality of model parameters 11, 12, 13 of the primary machine learning model 10. Updating step 4600 is shown in **Fig. 2c**. The plurality of model parameters 11, 12, 13 of the primary machine learning model 10 may be updated based on the combined loss ℓₜₒₜ. Inherently, the respective subsets 11, 12 of model parameters for the one or more secondary machine learning models 21, 22 may thereby, *de facto,* be updated as well. Therefore, an updated subset 11', 12' comprising updated model parameters 11', 12', 13' for the one or more secondary machine learning models 21, 22 may be obtained. The above measures may further involve, after jointly training the now trained primary machine learning model 10' and the one or more now trained secondary machine learning models 21', 22', providing the jointly trained primary machine learning model 10' and one or more secondary machine learning models 21', 22' as the scalable machine learning model 20. The jointly trained primary machine learning model 10' and one or more secondary machine learning models 21', 22' may be provided as a scalable machine learning model 20 for deployment on an automated or semi-automated driving system 110.

**Fig. 3** shows an example of a multiheaded machine learning model 300. A multiheaded machine learning model generally comprises a backbone model, and one or more application heads, or task heads. The backbone model, which is generally computationally intensive, is typically configured to extract generic features from an input. The generic features are then passed to the one or more application heads, which are each typically configured to perform one or more application tasks, or target tasks, of the multiheaded machine learning model. This specific model architecture, in which all application heads share a same backbone model, has the advantage of efficiency: for the performance of multiple particular applications, instead of a plurality of independent, large, task-specific machine learning models, it suffices to execute a single machine learning model, wherein a task differentiation takes place in the application heads. For different systems associated with different modes or levels of operation, usually multiheaded machine learning models are used. In that case, both the primary machine learning model and the secondary machine learning model may be multiheaded machine learning models. Then, a primary backbone model may be used, which is associated with the primary multiheaded machine learning model, and a secondary backbone model may be used, which is associated with the secondary multiheaded machine learning model. In the substitute mode, a limited subset of tasks may be performed, and a smaller backbone model may be used. The smaller backbone model may be an optimized backbone model, which has been trained to compute reduced features only for the application tasks of the secondary multiheaded machine learning model. The usage of a secondary, smaller, backbone model, which model may be less complicated and computationally less expensive, may decrease a computational overhead of the used backup system, which type of system is generally less powerful.

Optionally, the primary machine learning model 300 is a multiheaded machine learning model 300. The multiheaded machine learning model 300 may comprise a primary backbone model 310. Primary backbone model 31 may be configured to receive input data 30 and/or to output output data 30', 30". Multiheaded machine learning model 300 may further comprise one or more application heads 301, 302, 303. Each of the one or more application heads 301, 302, 303 may be configured to perform one or more of the one or more application tasks 121, 122, 123. An application head 301, 302, 303 may be configured to perform an application task 121, 122, 123 based on an output 30', 30" of the primary backbone model 310. The secondary machine learning model 21, 22 may comprise a secondary backbone model 320, and/or a subset of the application heads 301, 302, 303 of the primary machine learning model 300. The secondary backbone model 320 may comprise a subset 320 of the primary backbone model 310. Secondary backbone model 320 may be configured to receive input data 30, which is the same and/or of the same type as the input data 30 of primary backbone model 310. Secondary backbone model 320 may be configured to output output data 30", which is the same and/or of the same type as the output data 30', 30" of primary backbone model 310. The training 4500 may then comprise jointly training 4500 the primary backbone model 310 and the secondary backbone model 320. The multi-headed machine learning models 300 and 21 and/or 23 may share their backbone 310, 320 for the primary machine learning model 300 and the one or more secondary machine learning models 21, 22

An example of a description and an algorithm for training and/or deployment of a multiheaded machine learning model 300 as discussed above may be given below.

### Step 1: Training.

The primary machine learning model 10, which may be a multiheaded machine learning model 300, may be denoted as a main network or normal model and by *M. M* may comprise a backbone model 310, which may be denoted as a backbone and by *B,* and a number *k* of application heads 301, 302, 303, which may be denoted as task heads and by *Tᵢ, i* ∈ {1; ... ; *k*}. A secondary machine learning model 21, 22, which may be denoted as a fallback network and by *M*₀*,* may comprise a backbone *B'* ⊂ *B*, which is a submodel or subnetwork of *B,* and a number of *k' < k* task heads *Tᵢ, i* ∈ {1, ..., *k'*}*.* The model parameters, also denoted as weights, of *B',* are shared with the corresponding weights of *B,* similar for *Tᵢ, i* ∈ {1, *..., k'*}*.* Training jointly trains *M* and *M'* by the following Algorithm. Due to weight sharing between *M* and*M'*, the last step implicitly also updates the weights ofM'.

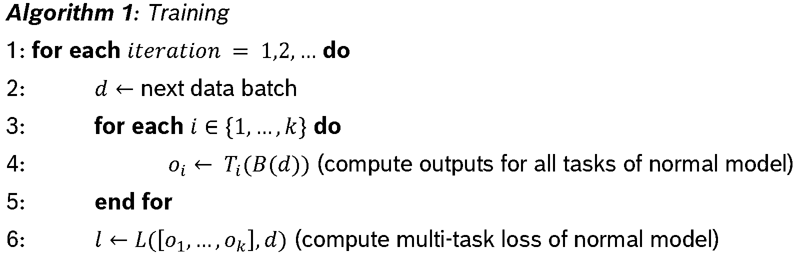

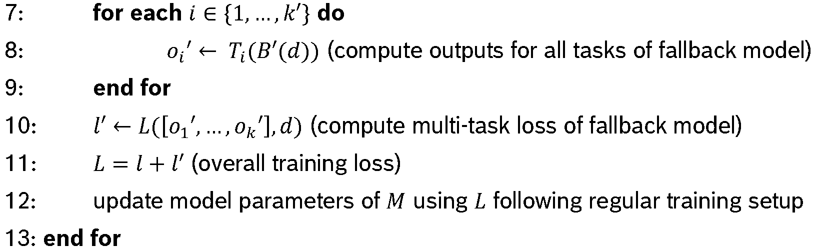

The regular training set up may comprise an optimizer.

### Step 2: Deployment.

As the weights of *M'* are fully contained in *M*, one may only need to deploy a single model *M* to, e.g., an ADAS function, as well as additional information about the architecture of *M'*, such as number of channels, layers, etc.. When transitioning to a fallback mode, the weights of *M'* may simply be extracted from *M*.

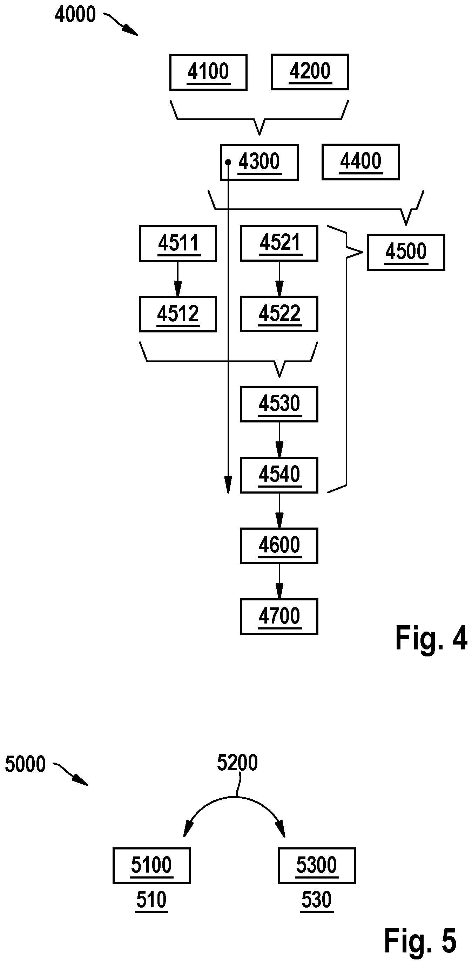

**Fig. 4** shows a method 4000 of providing a scalable machine learning model 20 for performing one or more application tasks 121, 122, 123, according to an embodiment. Method 4000 may be a computer-implemented method 4000. Method 4000 may comprise a step 4100 of accessing model data defining a primary machine learning model 10. Primary machine learning model 10 may comprise a plurality of model parameters 11, 12, 13. Method 4000 may comprise a step 4200 of accessing training data 31 for a training step 4300 of the primary machine learning model 10. Method 4000 may comprise a step 4300 of training the primary machine learning model 10 on the training data 31, to obtain a trained primary machine learning model 10'.

Method 4000 may further comprise a step 4400 of providing a secondary machine learning model 21, 22 to serve as a substitute for the primary machine learning model 10 in at least a subset 121, 122, 123 of the one or more application tasks 121, 122, 123, wherein the secondary machine learning model 21, 22 is constituted by a subset of the primary machine learning model 10, including a subset 11, 12 of the plurality of model parameters 11, 12, 13 of the primary machine learning model 10.

Method 4000 may comprise a step 4500 of jointly training the primary machine learning model 10 and the secondary machine learning model 21, 22. The step 4500 may take place during the training step 4300 of the primary machine learning model 10. Step 4500 may comprise a step 4511 of computing outputs 32 for the one or more application tasks 121, 122 of the primary machine learning model 10 for the training data 31. Step 4500 may comprise a step 4512 of computing, based on the outputs 32 and the training data 31, a first loss for the primary machine learning model 10. Step 4500 may comprise a step 4521 of computing outputs 32', 32" for the one or more application tasks 121, 122 of the secondary machine learning model 21, 22 for the training data 31. Step 4500 may comprise a step 4522 of computing, based on the outputs 32, 32" and the training data 31, a second loss for the secondary machine learning model 21, 22. Step 4500 may comprise a step 4530 of combining the first loss and the second loss to obtain a combined loss. Step 4500 may comprise a step 4540 of updating, based on the combined loss, the plurality of model parameters 11, 12, 13 of the primary machine learning model 10, thereby obtaining an updated subset of model parameters 11', 12' for the secondary machine learning model 21, 22.

Method 4000 may further comprise a step 4600 of, after jointly training, providing the jointly trained primary machine learning model 10 and secondary machine learning model 21', 22' as the scalable machine learning model 20.

In an embodiment, method 4000 may further comprise a step 4700 of using the updated model parameters 11', 12', 13' in a neural architecture search for a secondary machine learning model architecture. The neural architecture search may be a model architecture search, to arrive at a model architecture for, e.g., a secondary machine learning model 21, 22. The neural architecture search may be a hardware-aware neural architecture search, such as hardware-aware AutoML/NAS. A multi-objective search may be utilized. A multi-objective search may be utilized with respect to model performance metrics, such as an accuracy, and/or hardware performance metrics with respect to a resulting model, such as a latency, a number of FLOPs, a power consumption, and/or a memory usage.

**Fig. 5** shows a method 5000 of using a scalable machine learning model 20 comprising a primary machine learning model 10' and a secondary machine learning model 21', 22' for performing one or more application tasks 121, 122, 123 of a system 110, according to an embodiment. Method 5000 may be a computer-implemented method 5000. Scalable machine learning model 20 may have been trained according to an embodiment.

Method 5000 may comprise a step 5100 of, in a regular mode 510, using the primary machine learning model 10' for an application task 121, 122, 123 of the one or more application tasks 121, 122, 123 of the system 110. The regular mode 510 may comprise a general operation mode 510, main mode 510, and/or normal mode 510 and/or level 510 of operation. In the regular mode 510, a main processing system 110 may be operated. The main processing system 110 may execute the primary machine learning model 10'. The system 110 associated with the one or more application tasks 121, 122, 123 may be a driver assistance system 110, such as an ADAS 110.

Method 5000 may further comprise a step 5200 of, in a substitute mode 530, switching to a step 5300 of using a secondary machine learning model 21', 22' for an application task 121, 122, 123 of the one or more application tasks 121, 122, 123 of the system 110. The substitute mode 530 may comprise a substitute operation mode 530, such as a fall-back and/or a back-up mode 530. In the substitute mode 530, a substitute processing system may be operated. The substitute processing system may execute the secondary machine learning model 21, 22. The application task 121, 122, 123 for which the secondary machine learning model 21, 22 may be used may be a safety-critical application task 121, 122, 123, e.g., a safety-critical application task 121, 122, 123 of the one or more application tasks 121, 122, 123 of the driver assistance system 110.

In an embodiment, method 5000 may further comprise, e.g., as part of the step 5200 of switching, a step of dynamically configuring and/or scheduling operating the regular mode 510 and/or the substitute mode 530. In an embodiment, method 5000 may further comprise, e.g., as part of the step 5200 of switching, a step of dynamically configuring and/or scheduling performing one or more of the one or more application tasks 121, 122, 123 in the regular mode 510 and/or the substitute mode 530.

In an embodiment, method 5000 may further comprise, as part of the switching step 5200, switching to using the secondary machine learning model 21', 22' based on one or more operation conditions. For example, the one or more operation conditions may comprise at least one of: a failure of the primary machine learning model 10'; unavailability of the primary machine learning model 10'; a threshold of a performance of the primary 10' and/or secondary machine learning model 21', 22' with respect to the one or more application tasks 121, 122, 123, e.g., an accuracy being surpassed; and/or a threshold of a hardware efficiency, such as a latency, of the primary 10' and/or secondary machine learning model 21', 22' with respect to hardware resources of the system 110, e.g., compute resources, being surpassed.

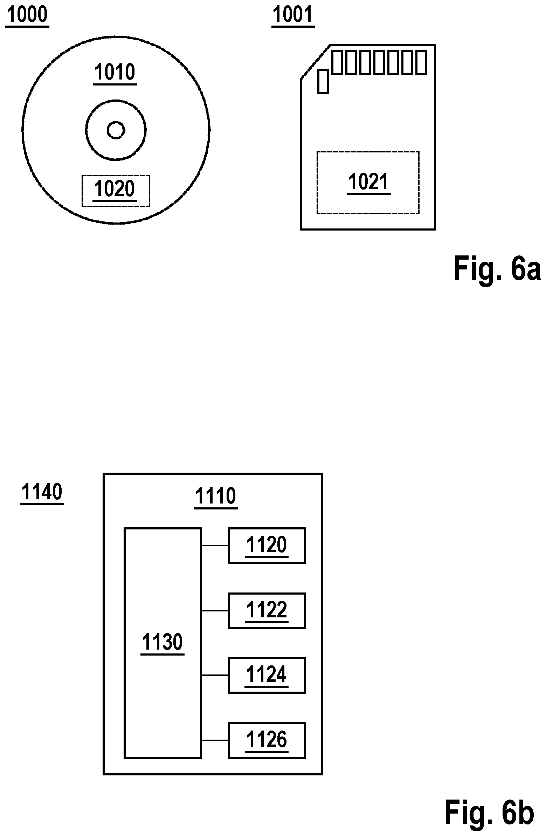

Any of the method(s) 4000, 5000 as described in this specification may be implemented on a computer as a computer implemented method 4000, 5000, as dedicated hardware, or as a combination of both. As also illustrated in **Fig. 6a****,** instructions for the computer, e.g., executable code, may be stored on a computer-readable medium 1000, 1001, e.g., in the form of a series 1020, 1021 of machine-readable physical marks and/or as a series of elements having different electrical, e.g., magnetic, or optical properties or values. The computer-readable medium 1000, 1001 may be a transitory or non-transitory medium. Examples of computer-readable mediums include memory devices, optical storage devices, integrated circuits, etc. By way of example, Fig. 6a shows an optical storage device 1000 and a memory card 1001.

**Fig. 6b** shows a processor system 1140 which may comprise or represent a system 100, 110 configured to perform a method 4000, 5000 as described elsewhere in this specification. The processor system may comprise one or more subsystems or components 1110. For example, a processing subsystem 1120 may be provided for executing computer program components to perform a method as described elsewhere in this specification. A memory 1122 may be provided for storing programming code, data, etc. A communication subsystem 1126, such as a network interface, may allow communication with other entities.

In some examples, a dedicated integrated circuit 1124 may be provided for performing part or all of the processing related to a method as described elsewhere in this specification. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. Further, where the system 1140 may be implemented in a cloud computing system, a cloud server and/or a compute farm, the various hardware components may belong to separate physical systems. For example, the processing subsystem 1120 may include a first processor in a first server and a second processor in a second server.

In an alternative embodiment of Fig. 6b, the processor system 1140 may represent a system 110, e.g., a driver assistance system 110, on which the scalable machine learning model 20 may be deployed. In other words, the processor system 1140 may represent a deployment target, which may perform an application task 121, 122, 123 as described elsewhere in this specification. The processor system 1140 may for example be an driver assistance system 110, and/or an automated or semi-automated vehicle 100 according to an embodiment, and/or otherwise as described in this application. The driver assistance system and/or automated or semi-automated vehicle 100 may comprise, for example, a sensor 115, such as an image sensor 115, such as a video camera 115, which may determine measurements of the environment in the form of sensor signals, which may be given by, for example, digital images, e.g., video, radar, LiDAR, ultrasonic, motion thermal images, or audio signals; for, e.g., detecting the presence of objects in the environment of the vehicle 100. An application task 121, 122, 123 may comprise classifying the data from the sensor 115, detecting the presence of objects in the sensor data and/or performing a semantic segmentation on the data, e.g., regarding traffic signs, road surfaces, pedestrians and vehicles. Another application task may comprise determining a continuous value or multiple continuous values, e.g., perform a regression analysis, e.g., regarding a distance, a velocity, an acceleration, and/or the tracking of an item, e.g., an object, in the data. These examples of application tasks 121, 122, 123 may be carried out on low-level features, such as edges or pixel attributes in the case of image data.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (4000) for providing a scalable machine learning model (20) for performing one or more application tasks (121, 122, 123), the method (4000) comprising
- accessing (4100) model data defining a primary machine learning model (10), wherein the primary machine learning model (10) comprises a plurality of model parameters (11, 12, 13);
- accessing (4200) training data (31) for training (4300) the primary machine learning model (10); and
- training (4300) the primary machine learning model (10) on the training data (31) to obtain a trained primary machine learning model (10');
wherein the method (4000) further comprises:
- providing (4400) a secondary machine learning model (21, 22) to serve as a substitute for the primary machine learning model (10) in at least a subset (121, 122, 123) of the one or more application tasks (121, 122, 123), wherein the secondary machine learning model (21, 22) is constituted by a subset of the primary machine learning model (10) including a subset (11, 12) of the plurality of model parameters (11, 12, 13) of the primary machine learning model (10);
- jointly training (4500) the primary machine learning model (10) and the secondary machine learning model (21, 22) by, during the training (4300) of the primary machine learning model (10):
- computing (4511) outputs (32) for the one or more application tasks (121, 122) of the primary machine learning model (10) for the training data (31), and computing (4512), based on the outputs (32) and the training data (31), a first loss (ℓ₁) for the primary machine learning model (10);
- computing (4521) outputs (32', 32") for the one or more application tasks (121, 122) of the secondary machine learning model (21, 22) for the training data (31), and computing (4522), based on the outputs (32, 32") and the training data (31), a second loss (ℓ₂, ℓ₃) for the secondary machine learning model (21, 22); and
- combining (4530) the first loss (ℓ₁) and the second loss (ℓ₂, ℓ₃) to obtain a combined loss (ℓₜₒₜ); and
- based on the combined loss (ℓₜₒₜ), updating (4540) the plurality of model parameters (11, 12, 13) of the primary machine learning model (10), thereby obtaining an updated subset of model parameters (11', 12') for the secondary machine learning model (21, 22);
- after jointly training (4500), providing (4600) the jointly trained primary machine learning model (10) and secondary machine learning model (21', 22') as the scalable machine learning model (20).

2. A method (4000) as in claim 1, wherein the primary machine learning model (10) is a multiheaded machine learning model (300), wherein the multiheaded machine learning model (300) comprises a primary backbone model (310) and one or more application heads (301, 302, 303), wherein each of the one or more application heads (301, 302, 303) is configured to perform one or more of the one or more application tasks (121, 122, 123) based on an output (30') of the primary backbone model (310), and wherein the secondary machine learning model (21, 22) comprises a secondary backbone model (320), the secondary backbone model (320) being a subset of the primary backbone model (310),
and wherein the training (4500) comprises jointly training the primary backbone (310) model and the secondary backbone model (320).

3. A method (4000) as in claim 1 or claim 2, wherein at least one of:
- the primary machine learning model (10) comprises one or more input elements (1) for receiving an input (101) to the primary machine learning model, and the secondary machine learning model (21, 22) comprises a subset (1, 1') of the one or more input elements (1);
- the primary machine learning model (10) comprises a number of model elements (1, 2, 3), such as network layers (1, 2, 3), and the secondary machine learning model (21, 22) comprises a subset of the model elements (1-2'-3', 1'-3);
- the primary machine learning model (10) is a convolutional neural network (10) and/or comprises one or more convolutional layers (2) having a number of channels and a convolutional kernel size, and the secondary machine learning model (21, 22) comprises a lower number of the channels and/or a smaller convolutional kernel size; and
- the primary machine learning model (10) comprises one or more transformer layers having a number of transformer heads, an embedding dimension, and/or a multi-layer perceptron ratio, and the secondary machine learning model (21, 22) comprises a lower number of the transformer heads, a smaller embedding dimension, and/or a smaller multi-layer perceptron ratio.

4. A method (4000) as in any of the preceding claims, wherein
- the primary machine learning model (10) further comprises one or more output elements (3) for outputting an output (102) of the primary machine learning model (10), and an output element (3, 3') of the secondary machine learning model (21, 22) is constituted by a subset (3, 3') of the one or more output elements (3) of the primary machine learning model (10); or
- an output element (3, 3') of the secondary machine learning model (21, 22) is constituted by one or more intermediate output elements of the primary machine learning model (10).

5. A method (4000) as in any of the preceding claims, wherein the primary machine learning model (10) comprises one or more model elements (1, 2, 3), such as network layers (1, 2, 3), and one or more connections (1*, 2*) connecting the one or more model elements (1, 2, 3), and wherein the secondary machine learning model (21, 22) further comprises one or more residual connections (3*), the residual connections (3*) directly connecting one or more model elements (1', 3) of the secondary machine learning model (21, 22) which are not directly connected in the primary machine learning model (10).

6. A method (4000) as in any of the preceding claims, wherein an input (101) of the primary machine learning model (10) comprises sensor data (101), for example, one or more of: image data, such as digital image data, radar, LiDAR, ultrasonic data, motion data, or thermal images; and audio data, such as an audio signal,
and the one or more application tasks (121, 122, 123) comprise one or more of:
- a perception task, such as object detection, semantic segmentation, or line detection;
- a classification task, such as image classification, or performing a semantic segmentation on input data (101); and
- performing a regression analysis, such as a regression analysis regarding a distance, a velocity, and/or an acceleration of an object in input data (101), and/or a tracking of an object in input data (101).

7. A method (4000) as in any of the preceding claims, wherein
- the primary machine learning model (10) is configured to receive an image having a first resolution as an input (101); and
- the secondary machine learning model (21, 22) is configured to receive an image having a second resolution as an input (101'),
wherein the second resolution is lower than the first resolution.

8. A method (4000) as in any of the preceding claims, the method (4000) comprising
- combining (4530) the first loss (ℓ₁) and the second loss (*ℓ₂*) by summing the first loss (ℓ₁) and the second loss (ℓ₂), for example, in a weighted sum, or by averaging the first loss (ℓ₁) and the second loss (*ℓ₂*)*.*

9. A method (4000) as in any of the preceding claims, further comprising
- using (4700) the updated model parameters (11', 12', 13') in a neural architecture search for a secondary machine learning model architecture.

10. A method (5000) of using a scalable machine learning model (20) comprising a primary machine learning model (10') and a secondary machine learning model (21', 22') for performing one or more application tasks (121, 122, 123) of a system (110), wherein the scalable machine learning model (20) has been trained using a method (4000) according to any of the preceding claims, the method (5000) comprising
- in a regular mode (510), using (5100) the primary machine learning model (10') for an application task (121, 122, 123) of the one or more application tasks (121, 122, 123) of the system (110), and
- in a substitute mode (530), switching (5200) to using (5300) the secondary machine learning model (21', 22') for an application task (121, 122, 123) of the one or more application tasks (121, 122, 123) of the system (110).

11. A method (5000) as in claim 10, further comprising
- dynamically configuring and/or scheduling operating the regular mode (510) and/or the substitute mode (530), and/or
- dynamically configuring and/or scheduling performing one or more of the one or more application tasks (121, 122, 123) in the regular mode (510) and/or the substitute mode (530).

12. A method (5000) as in claim 10 or 11, comprising
- switching (5200) to using (5300) the secondary machine learning model (21', 22') based on one or more operation conditions,
wherein the one or more operation conditions comprise at least one of:
- a failure of the primary machine learning model (10');
- unavailability of the primary machine learning model (10');
- a threshold of a performance of the primary (10') and/or secondary machine learning model (21', 22') with respect to the one or more application tasks (121, 122, 123), e.g., an accuracy, being surpassed; and/or
- a threshold of a hardware efficiency, such as a latency, of the primary (10') and/or secondary machine learning model (21', 22') with respect to hardware resources of the system (110), e.g., compute resources, being surpassed.

13. A method (4000, 5000) as in any of the preceding claims, wherein
- the one or more application tasks (121, 122, 123) comprise one or more application tasks (121, 122, 123) of an automated or semi-automated driving system (110), and the automated or semi-automated driving system (110) is integrated in an automated or semi-automated vehicle (100), such as an autonomous car (100) or aircraft;
- the primary machine learning model (10) is trained (4300) for deployment on the automated or semi-automated driving system (110); and
- the jointly trained primary machine learning model (10) and secondary machine learning model (21', 22') are provided (4600) as the scalable machine learning model (20) for deployment on the automated or semi-automated driving system (110).

14. A system (1140) comprising: one or more processors; and one or more storage devices storing instructions that, when executed by the one or more processors, cause the one or more processors to perform steps for a method (4000, 5000) according to any one of the preceding claims.

15. A transitory or non-transitory computer-readable medium (1000) comprising data (1020, 1021) representing instructions, which when executed by a processor system (1140), cause the processor system (1140) to perform one or more steps of the method (4000, 5000) according to any one of the preceding claims.
